# EUROPÄISCHE PATENTSCHRIFT

(11) **EP 2 412 044 B1**
(45) Veröffentlichungstag und Bekanntmachung des Hinweises auf die Patenterteilung: **13.08.2014**
(21) Anmeldenummer: 10709810.5
(22) Anmeldetag: 24.03.2010
(51) Int. Cl.: H01M 2/26, H01M 2/20

(54) **BATTERIEZELLENVERBINDER**
BATTERY CELL CONNECTOR
CONNECTEUR D'ÉLÉMENTS DE BATTERIE

(30) Priorität: 24.03.2009 DE 102009014116
(43) Veröffentlichungstag der Anmeldung: 01.02.2012
(73) Patentinhaber: Johnson Controls Autobatterie GmbH & Co. KGaA, 30419 Hannover (DE)
(72) Erfinder: KOCH, Ingo, 31789 Hameln (DE); STREUER, Peter, 30559 Hannover (DE); DUDENBOSTEL, Andreas, 31535 Neustadt (DE); SCHWARZE, Anja, 30966 Hemmingen (DE); SCHELLENBERG, Peter, 31515 Wunstorf (DE); STELLFELDT, Dirk, 31311 Uetze (DE)
(74) Vertreter: Günther, Constantin
(86) Internationale Anmeldenummer: PCT/EP2010/001848
(87) Internationale Veröffentlichungsnummer: WO 2010/108667

(56) Entgegenhaltungen:
- DE-A1-102007 022 246
- JP-A- 57 111 950
- JP-A- 60 047 370
- US-A- 4 420 673

## Beschreibung

Die Erfindung betrifft einen Batteriezellenverbinder gemäß dem Oberbegriff des Patentanspruchs 1. Derartige Batteriezellenverbinder werden beispielsweise in elektrochemischen Batterien, z. B. Starterbatterien für Automobile, zur internen Verbindung zwischen den Elektroden-Stapeln der Zellen der Batterie verwendet.

Gattungsgemäße Batteriezellenverbinder sind beispielsweise aus der DE 10 2007 022 246 A1, der JP 57111950 oder der US 5,424,148 bekannt.

Der Erfindung liegt die Aufgabe zugrunde, einen Batteriezellenverbinder mit einer im Vergleich zu den bekannten Batteriezellenverbindern verbesserten Hochstromfestigkeit anzugeben.

Diese Aufgabe wird durch die in dem Patentanspruch 1 angegebene Erfindung gelöst. Vorteilhafte Weiterbildungen der Erfindung sind in den Unteransprüchen angegeben.

Mit dem Begriff der Hochstromfestigkeit ist eine Eignung des Batteriezellenverbinders gemeint, einen möglichst hohen Strom dauerhaft übertragen zu können oder einen möglichst hohen Strom eine möglichst lange Zeit beschädigungsfrei übertragen zu können.

Der erfindungsgemäße Batteriezellenverbinder hat den Vorteil, eine wesentlich verbesserte Hochstromfestigkeit durch die Einführung einer in bestimmter Weise angeordneten und geformten Schulter zu erzielen, die sich zwischen den zwei Schenkeln des Batteriezellenverbinders erstreckt. Als Schulter wird in diesem Zusammenhang ein wandartiges Verbindungselement bezeichnet, das nachfolgend anhand der Ausführungsbeispiele noch näher beschrieben wird. Durch die erfindungsgemäß gestaltete Schulter mit einem nicht-linearen, konvexen Höhenverlauf kann, wie festgestellt wurde, einerseits der Stromfluss durch den Batteriezellenverbinder begünstigt werden, was bereits einer Erwärmung des Batteriezellenverbinders auf Grund hoher Ströme entgegenwirkt. Zudem bewirkt die erfindungsgemäße Formgebung der Schulter eine verbesserte Temperaturverteilung bei einer strombedingten Erwärmung des Batteriezellenverbinders, derart, dass die Temperaturverteilung gleichmäßiger wird und zudem eine verbesserte Wärmeabfuhr ermöglicht wird. Wie festgestellt wurde, unterstützen die zuvor erläuterten Vorteile einander in synergetischer Weise, so dass durch eine produktionstechnisch relativ einfach zu realisierende Maßnahme wie der erfindungsgemäßen Formgebung der Schulter eine erhebliche Verbesserung der Hochstromfestigkeit des Batteriezellenverbinders erzielt werden kann.

Gemäß einer vorteilhaften Weiterbildung der Erfindung nimmt die Dicke der Schulter, bezogen auf dieselbe Höhenlinie, von dem ersten Schenkel zu dem zweiten Schenkel hin zu. Gemäß einer weiteren Weiterbildung erfolgt die Zunahme der Dicke in einer linearen oder progressiven Art. Durch diese Maßnahmen kann die Hochstromfestigkeit des erfindungsgemäßen Batteriezellenverbinders zusätzlich verbessert werden. Es wurde nämlich herausgefunden, dass eine Materialhäufung im Bereich des Übergangs von dem ersten Schenkel zu dem zweiten Schenkel des Batteriezellenverbinders besondere Verbesserungen hinsichtlich der Hochstromfähigkeit erbringt. Mit einer Materialhäufung ist gemeint, dass die genannten Verbesserungen dadurch begünstigt werden, dass möglichst viel Material in der Schulter in der Nähe des Übergangs von dem ersten zu dem zweiten Schenkel vorgesehen wird.

Es ist zudem vorteilhaft, den Verlauf der Höhe der Schulter zu dem zweiten Schenkel hin degressiv zu gestalten. Vorteilhaft verläuft die Oberseite der Schulter in der Nähe des zweiten Schenkels nahezu parallel zu der der Verbindungsseite des Batteriezellenverbinders abgewandten Seite des ersten Schenkels. Durch eine derart abflachende Höhenkontur der Schulter wird zudem der Stromfluss durch den Batteriezellenverbinder optimiert und somit ebenfalls die Hochstromfestigkeit verbessert. Vorteilhaft ist es, die Schulter derart auszubilden, dass die Zunahme der Höhe der Schulter nicht-linear erfolgt, sondern mit einem zunächst relativ steilen Anstieg und einem dann zu dem zweiten Schenkel hin nahezu waagerechten Verlauf der Höhe.

Gemäß einer vorteilhaften Weiterbildung der Erfindung bildet die Schulter, betrachtet aus der Sicht der der Verbindungsseite gegenüberliegenden Seite, einen zumindest näherungsweise rechten Winkel zu dem zweiten Schenkel.

Die Erfindung wird nachfolgend anhand eines Ausführungsbeispiels unter Verwendung von Zeichnungen näher erläutert.

Es zeigen
- Figur 1: einen erfindungsgemäßen Batteriezellenverbinder in perspektivischer Darstellung und
- Figur 2: den Batteriezellenverbinder gemäß Figur 1 in Seitenansicht.

In den Figuren werden gleiche Bezugszeichen für einander entsprechende Elemente verwendet.

Batteriezellenverbinder werden in der Batterie dazu verwendet, (in der Literatur teilweise auch als Polplatten bezeichnete) Elektroden gleicher Polarität miteinander zu verbinden und eine Verbindung zu einem Batteriezellenverbinder einer benachbarten Batteriezelle herzustellen.

Der in den Figuren dargestellte Batteriezellenverbinder dient zur Verbindung der Elektroden eines Bleiakkumulators mit einem Batteriezellenverbinder einer benachbarten Batteriezelle des Bleiakkumulators. Hierbei wird eine Mehrzahl von Elektroden über Anschlussfahnen an den Batteriezellenverbinder angeschlossen. Bei der Fertigung solcher Bleiakkumulatoren werden die Elektroden meist in einem Fahnenangussverfahren mit den Batteriezellenverbindern verbunden. Anschließend werden diese verbundenen Elektroden in dem Bleiakkumulator verbaut. Der Batteriezellenverbinder verbindet die Elektroden eines Plattensatzes, d. h. entweder der positiven oder der negativen Platten, untereinander elektrisch und mechanisch. Der in den Figuren dargestellte Batteriezellenverbinder kann z. B. in so genannten AGM-Batterien verwendet werden. Hierfür ist der Batteriezellenverbinder vorteilhaft als so genannter Seitenverbinder ausgebildet, der eine relativ geringe Bauhöhe aufweist. Hierdurch baut der Batteriezellenverbinder in der Batterie relativ niedrig, was die Ausnutzung der zur Verfügung stehenden Batteriezellenhöhe für die Elektroden verbessert.

Nach Einbau in die Batterie ist der erfindungsgemäßen Batteriezellenverbinder überwiegend nicht in die Batteriesäure eingetaucht. Es erfolgt somit im Wesentlichen keine direkte Kühlung durch die Flüssigkeit, so dass sich der Batteriezellenverbinder bei einer Belastung mit hohen Strömen, z. B. Strömen oberhalb von 500 Ampere, relativ schnell stark erhitzen kann. Hierbei kann es vorkommen, dass der Batteriezellenverbinder beschädigt wird, z. B. durch Schmelzen einzelner Bereiche. Ein Schmelzen tritt bei bekannten Batteriezellenverbindern insbesondere an einer Schweißstelle zwischen dem ersten und dem zweiten Schenkel des Batteriezellenverbinders auf. Da bei einer solchen Anordnung von Batteriezellenverbindern eine Kühlung an den am stärksten temperaturbelasteten Stellen im Wesentlichen durch Wärmeleitung in die Elektroden und in geringem Ausmaß durch Konvektion erfolgt, kann es in Folge der relativ geringen Wärmekapazität relativ schnell zu starken Erwärmungen des Batteriezellenverbinders kommen.

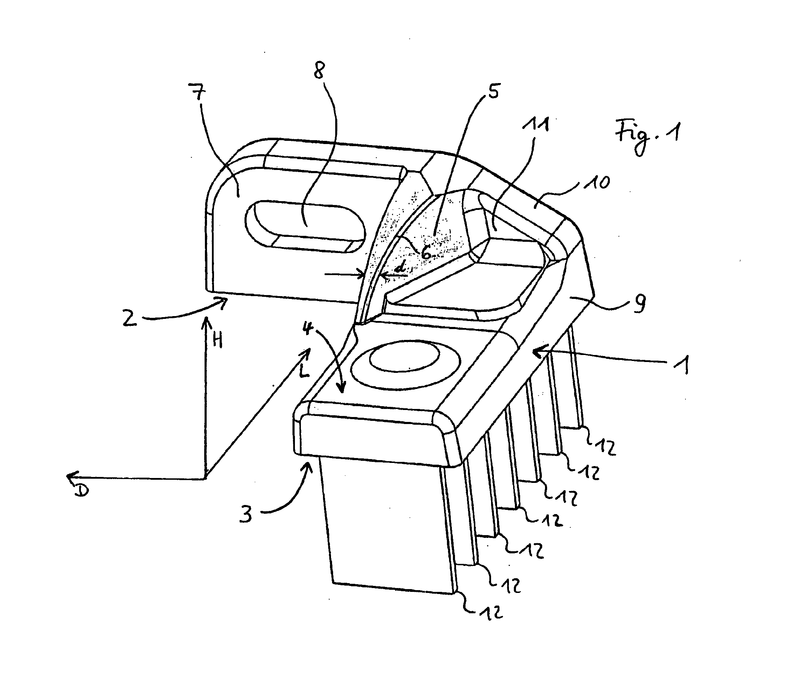

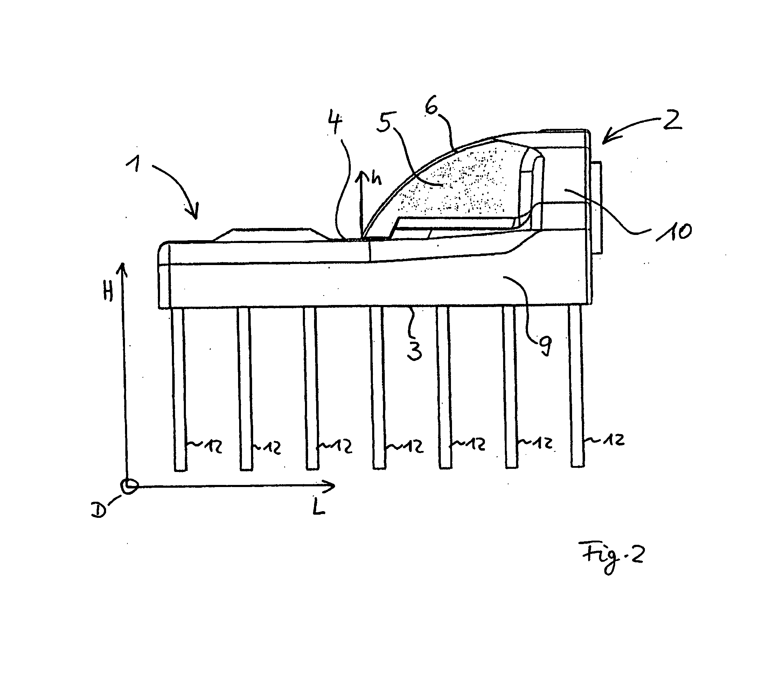

Zur besseren Darstellung der verschiedenen Ausrichtungen der Bestandteile des nachfolgend erläuterten Batteriezellenverbinders ist in den Figuren 1 und 2 ein Koordinatensystem mit den Achsen L, H und D dargestellt. Die Achse L erstreckt sich in Längsrichtung des ersten Schenkels 1 des Batteriezellenverbinders. Die Achse H erstreckt sich in Hochrichtung, und die Achse D erstreckt sich in Querrichtung, d. h. in der Dimension der Breite des ersten Schenkels 1.

Der erste Schenkel 1 weist eine Verbindungsseite 3 auf, die zur Verbindung mit einer Mehrzahl von Elektroden der Batterie vorgesehen ist. Die Elektroden sind in der Figur 1 nur ausschnittsweise in Form von Anschlussfahnen 12 dargestellt. Der Verbindungsseite 3 liegt eine Seite 4 des ersten Schenkels gegenüber. Der zweite Schenkel 2 ist im Wesentlichen senkrecht zum ersten Schenkel angeordnet und erstreckt sich von der Seite 4 fort.

Der zweite Schenkel 2 weist zudem eine Erstreckung über den ersten Schenkel 1 hinaus in Richtung der Achse D auf, d. h. in Querrichtung des ersten Schenkels 1. In diesem Bereich weist der zweite Schenkel 2 eine Kontaktlasche 7 auf, die zur elektrischen Verbindung von den Elektroden mit einer Kontaktlasche eines Batteriezellenverbinders einer benachbarten Batteriezelle dient. Die Kontaktlasche 7 weist eine langlochartige Öffnung 8 auf. Bei der Montage der Batterie werden dann die Kontaktlaschen von Batteriezellenverbindern benachbarter Batteriezellen im Bereich der langlochartigen Öffnungen miteinander verschweißt.

Weiterhin ist eine Schulter 5 vorgesehen, die sich von dem ersten Schenkel 1 zu dem zweiten Schenkel 2 erstreckt und eine wandartige Verbindung zwischen diesen Schenkeln 1, 2 bildet. Die Schulter 5 weist einen insbesondere aus der Figur 2 erkennbaren Verlauf der Höhe h auf, gemessen in Richtung der Achse H, der nicht-linear ist und bezüglich des ersten und des zweiten Schenkels 1, 2 konvex ist. Hierdurch erfolgt ausgehend von der Seite 4 des ersten Schenkels 1 ein zunächst relativ steiler Anstieg der Höhe h und zu dem zweiten Schenkel 2 hin eine Abflachung des Verlaufs der Höhe h, derart, dass der Verlauf nahezu waagerecht bzw. parallel zur Seite 4 verläuft. Insgesamt ergibt sich hierdurch ein degressiver Höhenverlauf. Entlang des Höhenverlaufs weist die Schulter 5 eine Fase 6 auf.

Die Schulter 5 weist zudem eine sich in Richtung der Achse L verändernde Dicke d auf, wobei die Dicke d in Richtung der Achse D bei einem gleich bleibenden Höhenwert (in Richtung h) gemessen ist. Die Dicke d nimmt von dem ersten Schenkel 1 zu dem zweiten Schenkel 2 hin zu, derart, dass sich ein linearer oder progressiver Verlauf ergibt. Hierdurch ergibt sich eine relativ große Materialhäufung in der Nähe des zweiten Schenkels 2.

Durch die verschiedenen Maßnahmen zur Materialanhäufung in diesem besonders stark wärmebelasteten Bereich wird zudem eine höhere Wärmespeicherkapazität bereitgestellt, was den Vorteil hat, dass eine Erwärmung langsamer als bei bekannten Batteriezellenverbindern erfolgt. Daher kann der erfindungsgemäße Batteriezellenverbinder einer hohen Strombelastung länger standhalten.

Der erste Schenkel 1 weist ebenfalls eine Zunahme seiner Dicke, gemessen in Richtung der Achse H, auf. Wie insbesondere in der Figur 2 erkennbar ist, nimmt die Materialdicke des ersten Schenkels 1 zu dem zweiten Schenkel 2 in einem Bereich 9 zu.

Der zweite Schenkel 2 weist in dem Bereich, in dem er mit dem ersten Schenkel 1 verbunden ist, einen abgeschrägten Bereich 10 auf, derart, dass die Höhe des zweiten Schenkels 2, gemessen in Richtung der Achse H, zu dem dem ersten Schenkel 1 zugewandten Ende des zweiten Schenkels 2 im Wesentlichen linear abnimmt.

In dem zweiten Schenkel 2 ist unterhalb des abgeschrägten Bereichs 10 eine Wand 11 vorgesehen. Der Abschnitt 10 bewirkt in Verbindung mit der Wand 11 vorteilhaft eine mechanische Stabilisierung des Batteriezellenverbinders und zudem eine Stromleitung. Insbesondere durch einen im Vergleich zu bekannten Batteriezellenverbindern steiler gestalteten Abschnitt 10 kann die Hochstromfestigkeit des Batteriezellenverbinders weiter verbessert werden.

Der beschriebene Batteriezellenverbinder wurde bereits unter Extrembedingungen untersucht. Es hat sich herausgestellt, dass bei einer Überbelastung des Batteriezellenverbinders mit einem Strom von 800 Ampere eine Verbesserung der Betriebszeit bis zum Durchschmelzen von bisher ca. 44 Sekunden auf nun 60 Sekunden erzielt werden konnte. Der erfindungsgemäße Batteriezellenverbinder trägt somit erheblich zu einer Verbesserung der Funktion und Betriebssicherheit von Starterbatterien in Fahrzeugen bei.

## Patentansprüche

1. Batteriezellenverbinder mit einem ersten und einem zweiten im Wesentlichen flachen Schenkel (1, 2), wobei der erste Schenkel (1) eine Verbindungsseite (3) zur Verbindung mit einer Mehrzahl von Elektroden einer Batterie aufweist, der zweite Schenkel (2) im Wesentlichen senkrecht zum ersten Schenkel (1) angeordnet ist und sich von der der Verbindungsseite (3) gegenüberliegenden Seite (4) des ersten Schenkels fort erstreckt, wobei eine sich von dem ersten zu dem zweiten Schenkel erstreckende Schulter (5) in Form eines wandartigen Verbindungselements vorgesehen ist, **dadurch gekennzeichnet, dass** der Verlauf der Höhe (h) der Schulter (5), gemessen von der der Verbindungsseite (3) gegenüberliegenden Seite (4) fort, von dem ersten Schenkel (1) zu dem zweiten Schenkel hin nicht-linear und bezüglich des ersten und des zweiten Schenkels (1, 2) konvex ist.

2. Batteriezellenverbinder nach Anspruch 1, **dadurch gekennzeichnet, dass** die Dicke (d) der Schulter (5) von dem ersten Schenkel (1) zu dem zweiten Schenkel (2) hin zunimmt.

3. Batteriezellenverbinder nach Anspruch 2, **dadurch gekennzeichnet, dass** die Dicke (d) der Schulter (5) zu dem zweiten Schenkel (2) hin linear oder progressiv zunimmt.

4. Batteriezellenverbinder nach wenigstens einem der vorhergehenden Ansprüche, **dadurch gekennzeichnet, dass** der zweite Schenkel (2) eine Kontaktlasche (7) zur elektrischen Verbindung von an die Verbindungsseite (3) angeschlossenen Elektroden mit externen Elementen aufweist, wobei die Kontaktlasche (7) eine Erstreckung im Wesentlichen senkrecht zu einer durch die Längsachse des ersten Schenkels (1) und einer Senkrechten zur flächigen Ausdehnung des ersten Schenkels (1) aufgespannten Ebene aufweist.

5. Batteriezellenverbinder nach wenigstens einem der vorhergehenden Ansprüche, **dadurch gekennzeichnet, dass** der Verlauf der Höhe (h) der Schulter (5) zu dem zweiten Schenkel (2) hin degressiv ist und in der Nähe des zweiten Schenkels (2) nahezu parallel zu der der Verbindungsseite (3) abgewandten Seite (4) des ersten Schenkels (1) verläuft.

6. Batteriezellenverbinder nach wengistens einem der vorhergehenden Ansprüche, **dadurch gekennzeichnet, dass** aus der Sicht der der Verbindungsseite (3) gegenüberliegenden Seite (4) die Schulter (5) einen zumindest näherungsweise rechten Winkel zu dem zweiten Schenkel (2) bildet.

7. Batterie mit einem Batteriezellenverbinder nach wenigstens einem der vorhergehenden Ansprüche.

## Claims

1. Battery cell connector having a first and a second substantially flat limb (1, 2), wherein the first limb (1) has a connection side (3) for connection to a plurality of electrodes of a battery, the second limb (2) is arranged substantially perpendicularly with respect to the first limb (1) and extends from that side (4) of the first limb which is opposite the connection side (3), wherein a shoulder (5) which extends from the first limb to the second limb and is in the form of a wall-like connecting element is provided, **characterized in that** the profile of the height (h) of the shoulder (5), measured from the side (4) opposite the connection side (3), from the first limb (1) toward the second limb is nonlinear and convex with respect to the first and second limbs (1, 2).

2. Battery cell connector according to Claim 1, **characterized in that** the thickness (d) of the shoulder (5) increases from the first limb (1) toward the second limb (2).

3. Battery cell connector according to Claim 2, **characterized in that** the thickness (d) of the shoulder (5) increases linearly or progressively toward the second limb (2).

4. Battery cell connector according to at least one of the preceding claims, **characterized in that** the second limb (2) has a contact clip (7) for making electrical contact between electrodes connected to the connection side (3) and external elements, wherein the contact clip (7) has an extent substantially perpendicular with respect to a plane which is spanned via the longitudinal axis of the first limb (1) and a perpendicular with respect to the planar extent of the first limb (1).

5. Battery cell connector according to at least one of the preceding claims, **characterized in that** the profile of the height (h) of the shoulder (5) toward the second limb (2) is degressive, and in the vicinity of the second limb (2) said profile extends virtually in parallel with that side (4) of the first limb (1) which is turned away from the connection side (3).

6. Battery cell connector according to at least one of the preceding claims, **characterized in that**, viewed from the side (4) which is opposite the connection side (3), the shoulder (5) forms an at least approximate right angle with respect to the second limb (2).

7. Battery having a battery cell connector according to at least one of the preceding claims.

## Revendications

1. Connecteur d'éléments de batterie comprenant une première et une deuxième branche essentiellement plates (1, 2), la première branche (1) présentant un côté de connexion (3) pour la connexion à une pluralité d'électrodes d'une batterie, la deuxième branche (2) étant disposée essentiellement perpendiculairement à la première branche (1) et se poursuivant depuis le côté (4) de la première branche opposé au côté de connexion (3), un épaulement (5) étant prévu, s'étendant depuis la première jusqu'à la deuxième branche en forme d'élément de connexion de type paroi, **caractérisé en ce que** l'allure de la hauteur (h) de l'épaulement (5), mesurée à partir du côté (4) opposé au côté de connexion (3), depuis la première branche (1) jusqu'à la deuxième branche, n'est pas linéaire et est convexe par rapport à la première et à la deuxième branche (1, 2).

2. Connecteur d'éléments de batterie selon la revendication 1, **caractérisé en ce que** l'épaisseur (d) de l'épaulement (5) augmente depuis la première branche (1) jusqu'à la deuxième branche (2).

3. Connecteur d'éléments de batterie selon la revendication 2, **caractérisé en ce que** l'épaisseur (d) de l'épaulement (5) augmente vers la deuxième branche (2) linéairement ou de manière progressive,

4. Connecteur d'éléments de batterie selon au moins l'une quelconque des revendications précédentes, **caractérisé en ce que** la deuxième branche (2) présente une patte de contact (7) pour la connexion électrique à des éléments externes d'électrodes raccordées au côté de connexion (3), la patte de contact (7) présentant une étendue essentiellement perpendiculaire par rapport à un plan tendu par l'axe longitudinal de la première branche (1) et une verticale par rapport à l'étendue plate de la première branche (1).

5. Connecteur d'éléments de batterie selon au moins l'une quelconque des revendications précédentes, **caractérisé en ce que** l'allure de la hauteur (h) de l'épaulement (5) vers la deuxième branche (2) est dégressive et s'étend à proximité de la deuxième branche (2) presque parallèlement au côté (4) de la première branche (1) opposé au côté de connexion (3).

6. Connecteur d'éléments de batterie selon au moins l'une quelconque des revendications précédentes, **caractérisé en ce que**, vu depuis le côté (4) opposé au côté de connexion (3), l'épaulement (5) forme un angle au moins pratiquement droit avec la deuxième branche (2).

7. Batterie comprenant un connecteur d'éléments de batterie selon au moins l'une quelconque des revendications précédentes.
